# EUROPEAN PATENT SPECIFICATION

(11) **EP 2 253 659 B1**
(45) Date of publication and mention of the grant of the patent: **15.10.2014**
(21) Application number: 09006678.8
(22) Date of filing: 18.05.2009
(51) Int. Cl.: C08J 3/22, C08J 9/00, C08L 67/02, C08L 23/08

(54) **Preparation and application of chain-extending concentrates for polyester foaming process**
Herstellung und Anwendung von kettenverlängernden Konzentraten für Polyesteraufschäumungsprozesse
Préparation et application de concentrés d'extendeur de chaîne pour un procédé de moussage de polyester

(43) Date of publication of application: 24.11.2010
(73) Proprietor: Armacell Enterprise GmbH & Co. KG, 12529 Schönefeld OT Waltersdorf (DE)
(72) Inventor: Li, Jie, Dr., 4800 Zofingen (CH); Gräter, Horst, 48155 Münster (DE); Meller, Mika, 02880 Veikkola (FI)
(74) Representative: von Füner, Nicolai

(56) References cited:
- EP-A1- 2 048 188
- EP-A2- 0 801 108
- US-A- 5 536 793
- US-A- 5 654 347
- US-A1- 2003 135 015
- US-A1- 2008 071 009
- US-A1- 2009 005 465
- DEGUCHI S; MASUMOTO M; NAKAMACHI K; TAGUCHI A: "Multifunctional compound concentrate for manufacture of polyester compact - consists of specific amounts of multifunctional compound and polyethylene having functional groups" WPI/THOMSON,, vol. 2000, no. 8, 26 November 1999 (1999-11-26), XP002510025
- HAYASHI H; MIYASHITA T: "PET resin compsn. prepn. used in plastic foam mfr. - by blending polyfunctional epoxy! resin and ionomer resin into PET resin" WPI/THOMSON,, vol. 1993, no. 24, 14 May 1993 (1993-05-14), XP002510024

## Description

### Background of Invention

Aromatic polyester foams, particularly foamed materials based on PET and PBT resins, are nowadays more and more produced by implementing a reactive foam extrusion comprising upgrading or improvement of molecular weight and extensional viscosity of aromatic polyester resins during the extrusion process. Often preferred are multifunctional compounds comprising multifunctional tretracarboxylic dianhydrides acting as chain-extenders.

The European Patent EP 08016250 discloses:
1) That the antioxidant comprising sterically hindered phenolic end groups in combination with tetracarboxylic dianhydride results in a significant increase of molecular weight of polyester during the heating and mixing process, as such a mixture also enhances the extensional viscosity of polyester remarkably.
2) Furthermore, addition of an oxazoline into a mixture comprised of sterically hindered phenolic antioxidant and tetracarboxylic dianhydride leads to an dramatic upgrading of polyester melt within a certain time frame during the thermal and mixing process and the extensional viscosity of polyester melt remained high and
3) Concentrates of this formulation comprised of sterically hindered phenolic antioxidant, tetracarboxylic dianhydride and oxazoline can be used for foam extrusion of polyesters. It has been surprisingly discovered in EP 08016250 that addition of such concentrates into a twin screw extruder improves the extrusion process. By applying oxazoline, an improvement of mechanical stiffness, a better isotropy of foam extrudates and an increase in extrusion throughput are expected. Besides, the cell structure of polyester foam modified by oxazoline is further improved and very fine cells could be obtained.

To reduce or eliminate the instability problems of said reactive foam extrusion, use of a concentrate (masterbatch) recommended for example by EP 08016250, US 5,288,764, WO 9509884, and EP 0801108, obtained by melt blending the multifunctional chain-extending/branching compound containing tetracarboxylic dianhydride and a carrier polymer, is mostly preferred. The concentrate is then mixed at given levels with the polyester in an extruder (preferably twin-screw extruder) to let aromatic polyester resin foamed in a stable process.

The melting point of some applied chain-extending ingredients is, however, lower than the carrier materials or below/within temperature range of preparation process. A list of such ingredients used in examples of EP 08016250, US 5,288,764, WO 9509884, and EP 0801108 is written in Tab. 1:

**Tab. 1: Melting point of ingredients**

| **Ingredient** | **Melting point (°C)** |
|---|---|
| PMDA | 286.0 - 287.5 |
| Irganox 1330/Ethanox 330 | 240.0 - 245.0 |
| 1,3-PBO | 145.0 - 147.0 |

Due to the fact that ingredients might be already, at least partially, molten in the preparation process of concentrates, a production of such masterbatches is difficult, if not impossible. The efficiency of made concentrates may be impaired because of the unwished chemical reaction during production of said concentrates. On the other hand, choice of inappropriate carrier materials may lead to troubles at or even interruption of a reactive foam extrusion production. Related to both facts, following problems can occur if preparing the concentrates according to US 5,288,764, WO 9509884, and EP 0801108:

US 5,288,764 discloses a concentrate comprising PET as carrier material and pyromellitic dianhydride as the multifunctional compound, which is used in the reactive extrusion process of PET foaming. The concentrate is obtained by mixing PMDA in molten PET at temperatures as high as 280-300°C, wherein PET molecular branching and gel formation take place during this melt blending process. The high processing temperature necessary for compounding of the ingredient can result in sublimation of PMDA at the extruder head. Such problems cause an instable foaming process and inconsistent foam quality.

Application of PC as carrier material as described in EP 0801108 leads similarly to above problems: A molecular branching of polycarbonate and gel formation occurs. A sublimation of PMDA caused by high processing temperature and additionally by sticking problems of PC is inevitable at the extruder head. It has been found that a concentrate containing PC as carrier material is not able to provide a continuously stable foaming process. In addition, the cell structure of produced foam products is mostly not uniform.

Another type of masterbatch is obtained according to WO 9509884 by melt blending 1 to about 50 wt% of multifunctional carboxylic anhydrides in 50 to 99 wt% of molten polyolefin. The concentrate is subsequently applied in the polyester foaming process at a high temperature (280-300°C), at which polyolefin tends to degradation. In worst case, the degradation of polyolefin causes a dramatic pressure decrease in extruder and die, so that the blowing agent can not remain in the polyester melt and no foaming is possible. The relatively low softening and melting point of polyolefin (LDPE used in examples of WO 9509884 has for instance a melting point around 110°C) and the relatively high drying temperature of PET (normally at a temperature of 110-165°C) can not guarantee a stable and continuous foaming process: 1) Drying of this masterbatch containing high-percentage of polyolefin is not easy due to stickiness and bridging problems caused by the low softening point of polyolefin and 2) A direct contact of the dried PET with said concentrate before melting zone softens and even melts the concentrate, this results in blocking of the feeder, hopper or even the feeding zone of the extruder, followed by an instable process or even an interruption of the extrusion production. Furthermore, due to a poor compatibility between polyolefin and polyester, an instable foaming process and inhomogeneous cell structure result from a poor dispersion of the ingredient and possible active nucleation sites within the polyester melt.

To solve/eliminate the problems mentioned above, a new type of concentrate containing multifunctional compound acting as chain-extenders/branchers needs to be developed. The new concentrate should be able to perform a stable foaming process consisting of a process chain from drying to extrusion and to allow a mass production of cellular foamed materials of polyesters with fine, uniform and consistent cell structure.

### 1. Description of Invention

In the current invention, it has been found that it is possible to obtain a masterbatch which ensures a stable foaming process without problems mentioned above and can be used to produce cellular foamed materials of aromatic polyesters and polyester blends with fine, homogeneous, consistent and close cells on one hand. The preparation process comprising melt distributing multifunctional chain-extending compounds in the matrix of a carrier material at a temperature lower than the melting point of the multifunctional compounds containing chain-extending ingredients to produce the concentrate succeeds without any molecular branching and gel formation on the other hand.

The masterbatch is comprised of a polymer blend consisting of a polar ethylene-acrylate copolymer and a high-temperature (HT) thermoplastic resin being selected from an aromatic polyester resin, PC, PA, PPO, PSU or PES, a multifunctional compound comprising a chain-extending ingredient or a mixture of such ingredients.

The preparation process of the concentrate consists basically of two steps: 1) Melt distributing the multifunctional compounds in form of powder and a HT thermoplastic resin in powder form in the matrix of the ethylene-acrylate copolymer at an internal mixer and 2) Further homogenizing and palletizing the molten mixture by using an extruder, preferably a single-screw extruder.

Before both preparation steps, the HT thermoplastic resin, in case of availability in form of granulates, needs to be grinded to powder to be used later in the mixing process, while the ethylene-acrylate copolymer in granulate shape is processed into melt matrix. In this invention, the particle size (according to DIN EN ISO 4610) of the HT polymer powder is less than 500µm in average, preferably less than 200µm, whereas at least 80wt% of HT thermoplastic powder have a particle size less than 200µm. Prior to further process steps, some HT thermoplastics needs to be dried at a defined temperature and time recommended by resin supplier to avoid a efficiency reduction of multifunctional compounds, as some of them are reactive to moisture. The drying temperature should be lower than the melting point of the multifunctional compound.

The temperature at which the multifunctional compound begins melting is defined as its melting point.

In case of a multifunctional compound consisting of only one ingredient, the melting point of this ingredient is thus the one of said multifunctional compound. If the multifunctional compound is comprised of a mixture of more than one ingredient, the melting point of the multifunctional compound is the one of an ingredient having the lowest melting point in comparison to other components in the multifunctional compound composition.

The HT thermoplastic powder and the multifunctional compound (mostly only available in form of powders with a particle size less than 200µm) are then mixed by using a mixing apparatus at a rotating speed of 100-400 rpm.

Granulates of the ethylene-acrylate copolymer are added to a dispersion kneading/mixing device (Banbury^{®} mixer) consisting of a mixing chamber in an 8-shape and two contra-rotating spiral-shaped blades encased in segments of cylindrical 8-shape housings. After softening of the ethylene-acrylate copolymer granulates (at about 40-50°C), the mixture of the powders is added into the Banbury^{®} mixer. The powders are mixed, interspersed and compounded in the ethylene-acrylate resin system by using this internal mixer. The rotors may be cored for circufation of heating or cooling media, while the chamber can also be tempered with help of media. Due to an intensive friction between the granulates and the blades, the ethylene-acrylate experiences a shear stress and is molten by the shearing heat. The melt temperature, which is continuously monitored by measuring, can be influenced and controlled by the rotating speed of the rotors and additionally by the tempering medium within the blade core and/or at the chamber. The mixing process in the Banbury^{®} mixer is carried out so as to ensure melt temperatures at least 20°C, preferably at least 60°C below the melting point of the multifunctional compound.

In addition, the melt temperature needs to be kept at least 20°C below the glass transition temperature of amorphous HT thermoplastics or at 60°C below the melting point of crystalline HT thermoplastic resin. In general, the process and melt temperatures remain in a range of 120-175°C. The further shearing of the mixture by blades rotating further distributes the unmolten powder components in the matrix of the molten ethylene-acrylate copolymer within a define time frame (generally about 4-8min.) to ensure a relatively homogeneous mixture.

Subsequently, the compounded mixture is continuously fed into an extruder by a roll-mill heated at 80-100°C: The roll-mill compresses first the mass to a sheet, followed by being sliced to strips and by feeding the mixture in form of strips into an extruder, preferably a single-screw extruder. The application of a single-screw extruder is preferred to easily control the throughput of the masterbatch by screw rotating speed. Another advantage of the single-screw extruder is connected with the fact of no or much less local overheating of thermoplastic materials by shearing in comparison to a twin-screw extruder. The extrusion of the mixture is implemented also at temperatures at least 20°C, preferably at least 60°C below the melting point of the multifunctional compounds.

In addition, the extrusion temperatures need to be kept at least 20°C below the glass transition temperature of an amorphous HT thermoplastics or at least 60°C below the melting point of a crystalline HT thermoplastic resin. In general, the extrusion step for preparation of the concentrate is implemented in a temperature range of 120-175°C. The mixture is further homogenized at the extruder and pelletized. The concentrate in form of granulates is cooled down and packed after a drying process. The high throughput capacity of a Banbury^{®} mixer enables the synchronization of a discontinuous interspersing/mixing process with a continuous extrusion pelletizing process.

Another embodiment of preparing said concentrates is to use a twin-screw extruder for melt blending the powder mixture of the multifunctional compound and the HT thermoplastic into the matrix of the ethylene-acrylate copolymer at temperatures at least 20°C, preferably at least 60°C below the melting point of the multifunctional compound. In general, the extrusion preparation of the concentrate is implemented in a temperature range of 120-175°C. The mixture consisting of the multifunctional ingredients and the HT polymer is preferably incorporated into the extruder by a side-feeder, while granulates of the ethylene-acrylate copolymer are added into the extruder through the hopper.

The advantages of this invention are described as follows:

In comparison to polyolefin, the ethylene-acrylate copolymers, consisting of ethylene butyl acrylate (EBA), ethylene ethyl acrylate (EEA) and ethylene methyl acrylate (EMA) (s. Fig.1), feature significantly better thermal and processing stability, even though their melting point is as low as 90-100°C: EMAs for instance remain stable up to 350°C in air and EEAs are stable over 400°C in a nitrogen atmosphere. And the process temperature can be set up to 300°C without degradation. More importantly, as a result of their high polarity, the ethylene-acrylate copolymers are not only compatible with polyolefin, but also with a broad range of engineering plastics such as PA, PBT, PET, ABS, PC or LCPs (Liquid Crystal Polymers) etc. The ethylene butyl acrylate resins (EBA) offer additionally excellent low-temperature toughness and impact resistance.

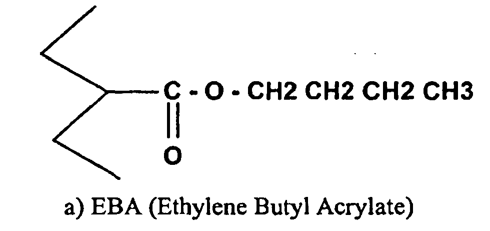

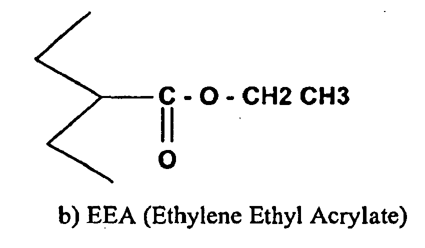

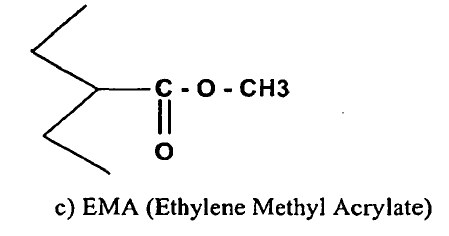

### Fig. 1: a) Ethylene Butyl Acrylate (EBA), b) Ethylene Ethyl Acrylate (EEA) and c) Ethylene Methyl Acrylate (EMA).

Acting as masterbatch carrier resins, the ethylene-acrylate copolymers demonstrate the same benefits as in their modifier role, i.e. general-purpose toughness, thermal stability, compatibility with engineering polymers and high filler acceptance. Moreover, according to current knowledge, they do not adversely affect the mechanical properties of engineering polymers to which they are added. The most important advantage of the current invention is that the low melting point (90-100°C) and high thermal stability (up to 350-400°C) of ethylene-acrylate copolymers can be beneficially exploited to prepare the invented concentrate at a low temperature and to foam aromatic polyester at a high temperature. Therefore, the chain-extending ingredients remain 100% unreacted during the preparation process and can be applied in a later foaming process at their full efficiency. An ethylene-acrylate copolymer in form of granulates is processed to obtain said concentrate without being milled before, in this invention. Last, but not least, resins of the ethylene-acrylate copolymers are classified as non-sticky pellets. An ethylene-acrylate copolymer comprising acrylate content by weight from 3 to 50% and featuring a melt-flow index from 0.1 to 50 g/10 min. at 190°C/2.16kg (according to ISO 1133) is claimed as a component of the concentrate in the current invention.

A high-temperature (HT) thermoplastic acting as the blend partner in the carrier material composition of said concentrate having 1) a melting point not lower than 200°C for crystalline or 2) a glass transition temperature not lower than 140°C for amorphous polymers is introduced to give the masterbatch a much higher overall softening and melting point than one of an ethylene-acrylate copolymer, so that 1) the concentrate can be dried at a higher temperature than that for the concentrate described in WO 9509884 first of all and 2) problems of bridging and stickiness in feeder, hopper and extruder feeding zone can be diminished or eliminated. However, a selected HT thermoplastic resin must meet the requirement that said HT polymer is completely molten till 300°C to prevent the foaming process from any inhomogeneous domains.

Even though the glass transition temperature of PMMA is about 110°C, so below 140°C, but this amorphous polymer can be exceptionally used as said HT thermoplastic in the concentrate composition, since the resin of PMMA is rigid.

Preferred use of aromatic polyester resin (including amorphous polyesters) such as PET, PBT, PTT, PEN or PBN can further improve the dispersion of the multifunctional chain-extending compounds in polyester melt. But, a selection of other HT thermoplastics such as PC, PA, PPO, PSU or PES is possible for this application, wherein polymer resins even incompatible with aromatic polyester resins are also candidate for this masterbatch, because the ethylene-acrylate copolymer is compatible with the aromatic polyesters and acts as a coupling material. Moreover, a HT thermoplastic resin can be chosen to improve some properties such as ductility, coupling function or conductivity of final cellular foams of aromatic polyester. Therefore, a wide range of available/usable HT thermoplastics or a mixture thereof is another advantage in the current invention. The mostly preferred HT thermoplastic resin is an aromatic polyester selected from PET, PBT and PEN (IV=0.4-1.4dI/g according to ASTM 4603).

Application of said polymer blend as carrier material comprising the ethylene-acrylate copolymer and a HT thermoplastic/mixture of HT thermoplastic resins assures that no polymer degradation occurs not only at the preparation, but also at the subsequent foaming process. The most important advantage of this invention can be seen in an uniform distribution and a full dispersion of the multifunctional compound during the foaming process, as they are encapsulated in at least the ethylene-acrylate copolymer, which is fully compatible with aromatic polyester melt.

Instead of the ethylene-acrylate copolymer, an ethylene-vinylacetate (EVA) copolymer can be also used as the blend partner of the carrier material in the concentrate composition due to the low melting point, the good compatibility and filler acceptance of this copolymer. But the thermal resistance of EVA is not as superior as the ethylene-acrylate copolymers.

The multifunctional compounds used in the current invention are comprised of one or more chain-extending/branching ingredients having a melting point higher than 140°C, preferably selected from a group consisting of tetracarboxylic dianhydride, oxazolines, oxazines, acyllactams and antioxidant comprising sterically hindered phenolic end groups or mixtures thereof.

The most important multifunctional chain-extending compound used in this invention consists of tetra or polycarboxylic dianhydride in an amount from 2 to 30 percent, preferably from 5 to 15 percent by weight of the concentrate and selected from a group containing at least two anhydride per molecule such as pyromellitic dianhydride, benzophenone dianhydride, 2,2-bis (3,4-dicarboxyphenyl) propane dianhydride, 3,3', 4,4'-biphenyltetracarboxylic acid dianhydride, bis (3,4-dicarboxyphenyl) ether dianhydride, bis (3,4-dicarboxyphenyl) thioether dianhydride, bisphenol A bisether dianhydride, 2,2-bis (3,4-dicarboxylphenyl) hexafluoropropane dianhydride, 2,3,6,7-naphtalene-tetracarboxylic acid dianhydride, bis (3,4-dicarboxyphenyl) sulfone dianhydride, 1,2,5,6-naphthalene-tetracarvoxylic acid dianhydride, 2,2',3,3'-biphenyltetracarvoxylic acid dianhydride, hydroquinone bisether dianhydride, bis (3,4-dicarboxyphenyl) sulfoxide dianhydride, 3,4,9,10-perylene tetracarboxylic acid dianhydride and blends thereof.

Preferred tetracarboxylic dianhydrides are those containing aromatic rings.

Particularly preferred tetracarboxylic dianhydrides are pyromellitic dianhydride, 3,3', 4,4'benzophenonetetracarboxylic acid dianhydride and mixtures thereof.

The most preferred tetracarboxylic dianhydride is pyromellitic dianhydride (PMDA).

In EP08016250, it has been found that the antioxidant comprising sterically hindered phenolic end groups in combination with a tetracarboxylic dianhydride leads to a significant increase of molecular weight of polyester during the heating and mixing process, since such a mixture also enhanced the extensional viscosity of polyester remarkably. Therefore, a primary antioxidant such as sterically hindered phenolic antioxidant: 4-((3,5-bis((4-hydroxy-3,5-ditert-butyl-phenyl)methyl)-2,4,6-trimethyl-phenyl)methyl)-2,6-ditert-butyl-phenol, sterically hindered hydroxyphenylalkylphosphonic acid ester or half ester is also applied in combination with tetracarboxylicdianhydrides in the current invention.

Beside above mentioned antioxidants, particularly suitable sterically hindered phenolic antioxidants selected from the group of so-called primary antioxidants include for instance: Pentaerythritol tetrakis(3-(3,5-di-tert-butyl-4-hydroxyphenyl)propionate), thiodiethylene bis[3-(3,5-di-tert-butyl-4-hydroxyphenyl)propionate], octadecyl-3-(3,5-di-tert.butyl-4-hydroxyphenyl)-propionate, N,N'-hexane-1,6-diylbis(3-(3,5-di-tert-butyl-4-hydroxyphenylpropionamide)), 1,3,5-tris(3,5-di-tert-butyl-4-hydroxybenzyl)-1,3,5-triazine-2,4,6(1H,3H,5H)-trione.

Particularly preferred sterically hindered phenolic antioxidant is selected from hydroxyphenyle propionate and hydrobenzyl groups such as: 4-((3,5-bis((4-hydroxy-3,5-ditert-butyl-phenyl)methyl)-2,4,6-trimethyl-phenyl)methyl)-2,6-ditert-butyl-phenol or calcium bis(monoethyl(3,5-di-tert-butyl-4-hydroxylbenzyl)phosphonate).

Furthermore, 0.1 to 10 weight percent, preferably 0.5 to 5 weight percent based on the total amount of the concentrate of an oxazoline for further improvement of foamability of the polyesters can also be composed in the recipe of the multifunctional compound comprising mixture of sterically hindered phenolic antioxidant and tetracarboxylic dianhydride. Mixtures of different oxazoline can be applied in the concentrate recipes. Preferred oxazoline is the monooxazoline for instance 2-, 3- or 4-oxazoline as well as bisoxazoline. Particularly preferred bisoxazoline is 1,3-phenyl bisoxazoline and 1,4-phenyl bisoxazoline. Trioxazoline can be alternatively integrated into the recipe of said concentrates.

The current invention relates thus to the preparation and application of concentrates comprising 2-30wt%, preferably 10-15wt% of multifunctional compounds. The carrier material used in the masterbatch consists of 10-85wt% (by weight of the concentrate) ethylene-acrylate copolymer and 10-85wt% (by weight of the concentrate) HT thermoplastics. Preferably, the ethylene-acrylate copolymer and the HT thermoplastics are applied each in amount from 30 to 60wt% by weight of the concentrate.

In the reactive extrusion processes to produce low density cellular foams, an amount of concentrate from 1 to 20%, preferably between 1 and 10% by weight of the mixture comprising concentrate and the polyester resin is applied, wherein an extrusion line is preferred, consisting basically of an extruder, die, dosing equipment, gas injector, heat exchanger, static mixer and die. The extrusion line is followed by downstream equipment such as puller, conveying rolls with air cooling, sawing unit, further cooling and grinding and packaging etc. All types of foaming extruders can be used for the reactive foam extrusion in the current invention: single-screw or co-/counter-rotating twin-screw extruder, tandem extrusion line consisting of a primary extruder (twin- or single-screw extruder) and a secondary/cooling single-screw extruder.

The blowing agents required for expansion are generally selected from carbon dioxide, nitrogen, alcohols, ketons, hydrocarbons, fluorohydrdocarbons or mixture thereof..

The concentrate can contain additionally further additives such as process/thermal stabilizers, nucleating agents, UV stabilizers and flame retardants etc. in the recipes. Representative flame retardants are for example halogenated, charforming (like phosphorus-containing) or water-releasing compounds, charforming and water-releasing (like Zn borate) compounds. Commonly used nucleate types are talc, TiO₂ MgO, BaSO₄, SiO₂, Al₂O₃, CdO, ZnO, mica fuller's earth, diatomaceous earth or the like.

The application of said concentrates can be seen in all thermoplastic polymer processes (e.g. blow molding, batch process, injection molding or sheet extrusion for thermoforming), but focuses mainly on reactive foam extrusion to process a wide range of aromatic polyesters. The process for foaming aromatic polyesters is generally foam extrusion, wherein profile, annular, multihole and flat die can be applied to form an extrudate into a required final shape. Preferred aromatic polyesters for production of final cellular foamed products include those derived from terephthalic acid, isophthalic acid, naphthalenedicarboxylic acid, cyclohexanedicarboxylic acid and the like or the alkyl esters. Particularly preferred is DMT- or PTA-based PET with I.V.=about 0.4 - 1.4 dl/g (according to ASTM 4603) including homo- and copolymer. Alternatively, polyester blends comprised of polyester/polyolefin (e.g. PET/LLDPE, PET/LDPE or PET/PP), polyester/polyester (PET/PBT, PET/PEN, PET/PC), polyester/styrene copolymer (PET/SAN, PET/SEBS), polyester/high temperature thermoplastics etc. can be processed with help of the invented concentrates.

### Examples of the invention

This invention is illustrated by the following examples given for illustrative purpose and not to be regarded as limiting the invention or the manner in which it can be practiced.

### Example 1

46.5 weight parts of PET copolymer granules (I.V.=0.76 dl/g) were milled to powder having at least 80wt% particles less than 200µm and dried at 165°C for 8h. The PET powder was mixed with 12 weight parts PMDA and 0.15 weight parts Irganox^{®} B900 in a mixer.
41.35 weight parts of Elvaloy^{®} 1820 (DuPont) were first added to a 5000 cm³ Banbury^{®} mixer. After the ethylene-acrylate copolymer is softened at 40-50°C, the mixture of above powders was added to mixer for being mixed and blended with Elvaloy^{®} 1820 at 30-40 rpm for 4-7 minutes. The rotating speed of the mixer was adjusted to ensure a melt temperature between 160-170°C. The compound was fed to a roll mill heated at 80-100°C and pressed to a thin sheet. The sheet was sliced to strips, followed by continuously feeding the mixture in form of strips into a single-screw extruder (φ45mm/30D). The mixture was extruded through a strand die. The strands were cooled down in a water bath, pelletized and dried immediately in a dryer.
The process parameters were:
Extruder: Single-screw extruder with 45mm diameter and 30D length
Speed of the screw: 70-120 rpm
Barrel temperatures: 100-165°C
Die temperature: 165°C
Throughput: 30-35 kg/h.
The prepared concentrate was then packed and sealed in a bag coated with aluminum.

### Example 2

The procedure of Example 1 was repeated with the difference that 2.5 weight parts of Irganox^{®} 1330 were added, 10 instead of 12 weight parts of PMDA and 40.85 instead of 41.35 weight parts of Elvaloy^{®} 1820 were used for the preparation process.

### Example 3

The procedure of Example 2 was repeated with the difference that 1.5 weight parts of 1,3 PBO (from Evonik) were added and 8.5 instead of 10 weight parts of PMDA were applied. After the PET powder was dried at 110°C for at least 10h instead 165°C for 8h, this powder was added into the Banbury^{®} mixer. A further difference is seen in the melt temperature in the Banbury^{®} mixer and the single-screw extruder. In Example 3, the Banbury^{®} mixer was run at a lower rotating speed than in Example 2 to have a melt temperature at 120-12°C. The extruder was set at the temperatures:
Barrel temperatures: 100-125°C
Die temperature: 125°C

### Example 4

The procedure of Example 1 was repeated with the difference that 46.5 weight parts of Ultrason^{®} E 2020 SR micro (supplied by BASF in form of powder having particle size < 100µm) instead of PET were used at the preparation process. The drying condition for PES resin was as same as for PET.

### Example 5

PET copolymer (I.V.=0.78dl/g) was dried at 170°C for 8h and the concentrate of Example 1 at 80°C for 8h. a). The PET resin with 3.4% of the concentrate and effectively 0.65% of a nucleating agent each by weight of the total throughput was continuously extruded and foamed at a throughput of 350-400kg/h with help of a co-rotating twin-screw extruder BC180 (φ180mm/L/D=28 and made by BC Foam), whereas CO₂ as blowing agent was injected into the extruder at a rate of 3.5kg/h. The twin-screw extruder was attached with a static mixer, the extrusion tooling (strand die) consisted of a divergent adapter and a multihole plate. The foamed extrudate was formed in a calibrator and cooled down. The temperature setting of the extruder can be seen in Tab. 2:

**Tab. 2: Temperature setting**

| Feature | Setting |
|---|---|
| Temperature of feeding zone (°C) | 120-220 |
| Temperature of melting zone (°C) | 280-290 |
| Temperature of metering zone (°C) | 255-275 |
| Temperature of static mixer (°C) | 210-255 |
| Temperature of strand die (°C) | 270-290 |

The foamed extrudate showing a thickness of 60-68mm was further cooled down by air and pulled to a sawing unit to be cut.

The extrusion process was very stable and an extruded PET foam with a fine and uniform cell structure was obtained, whereas the foam density was 158kg/m³. The results from a compression testing showed a strength of 2.5MPa and a modulus of 92MPa (according to ISO 844).

### Example 6

The foam extrusion of Example 5 was repeated with the difference that the concentrate of Example 2 instead of Example 1 was used and cyclopentane at a rate of 8-9kg/h instead of CO₂ was injected into the extruder..

The extrusion process was very stable and an extruded PET foam with a fine and uniform cell structure was obtained at a foam density of 110kg/m³. The results from a compression testing showed a strength of 1.65MPa and a modulus of 74MPa (according to ISO 844).

### Example 7

The foam extrusion of Example 6 was repeated with the difference that 1) the concentrate of Example 3 instead of Example 2 was used and 2) cyclopentane at a rate of 10-11kg/h was injected into the extruder.

The extrusion process was very stable and an extruded PET foam with a fine and uniform cell structure was obtained at a foam density of 81kg/m³. The results from a compression testing showed a strength of 1.20MPa and a modulus of 32MPa (according to ISO 844).

### Example 8

In this example, a co-rotating twin screw extruder (FG75 manufactured by Fagerdala) having a screw diameter of φ75mm and L/D=32, followed by a static mixer and a strand die, was applied. The forming tooling was a strand die consisting of 74 orifices distributed on the exit area of 67.5x35.5mm. The foam extrudate underwent a calibration after leaving the strand die to be shaped to a rectangular board.

PET copolymer (I.V.=0.78dl/g) was dried at 165°C for 8h and the concentrate of Example 4 at 80°C for 8h. a). The PET resin with 3.4% of the concentrate and effectively 0.65% of a nucleating agent each by weight of the total throughput was continuously extruded and foamed at a throughput of 45kg/h. The PET resin and the concentrates were separately fed into the twin screw extruder by individual dosing units. The mixture was extruded and a foaming took place with help of n-pentane as blowing agent. The process parameters are listed in Tab. 3:

**Tab. 3: Process parameters**

| Feature | Parameter |
|---|---|
| Temperature of feeding zone (°C) | 120-260 |
| Temperature of melting zone (°C) | 280-285 |
| Temperature of metering zone (°C) | 275-280 |
| Temperature of static mixer (°C) | 275-285 |
| Temperature of die (°C) | 285-290 |
| Melt throughput (kg/h) | 45 |
| Gas injection (g/min) | 17.5 |

The extrusion process was very stable and a produced PET foam with a fine and uniform cell structure was obtained at a foam density of 115kg/m³.

### Example 9

The foam extrusion of Example 8 was repeated with the difference that 1) the concentrate of Example 3 in amount of 5.5% instead of 3.4% Example 4 was used all by weight of the total throughput and 2) a low-viscous PET copolymer (I.V.=0.60dl/g) was foamed.

The extrusion process was very stable and an extruded PET foam with a fine and uniform cell structure was obtained at a foam density of 115kg/m³.

## Claims

1. A concentrate (masterbatch) useful as chain-extending/branching agent comprising a ethylene-acrylate copolymer, a high-temperature (HT) thermoplastic resin being selected from an aromatic polyester resin, PC, PA, PPO, PSU or PES and having 1) a melting point not lower than 200°C for crystallin or 2) a glan transition temperature not lower than 140°C for amophous polymers and a multifunctional compound selected from one or more chain-extending/branching ingredients having a melting point higher than 140°C, wherein the concentrate is obtainable by melt distributing the multifunctional chain-extending compound in the matrix of the ethylene-acrylate copolymer at a temperature lower than the melting point of the multifunctional compound.

2. The concentrate according to claim 1, wherein the multifunctional compound is selected from a group consisting of tetracarboxylic dianhydride, oxazolines, oxazines, acyllactams and antioxidant containing sterically hindered phenolic end groups or mixtures thereof.

3. The concentrate according to claim 1 comprising 10 to 85 weight percent of the ethylene-acrylate copolymer which is selected from ethylene butyl acrylate (EBA), ethylene ethyl acrylate (EEA) and ethylene methyl acrylate (EMA) copolymer.

4. The concentrate according to claim 3, wherein the ethylene-acrylate copolymer contains 3 to 50 percent of acrylate content by weight of the ethylene-acrylate copolymer and has a melt-flow index from 0.1 to 50g/10 min. at 190°C/2.16kg.

5. The concentrate according to claim 1 comprising 10 to 85 weight percent of the high-temperature (HT) thermoplastic resin being selected from an aromatic polyester resin, PC, PA, PPO, PSU or PES.

6. The concentrate according to claim 5, wherein the high-temperature thermoplastics are aromatic polyesters having an intrinsic viscosity of 0.4 to 1.4 dl/g.

7. The concentrate according to claim 1 or 2 comprising 2 to 30 percent of the multifunctional compound by weight of the concentrate.

8. The concentrate according to claim 7 comprising the multifunctional compound selected from a tetracarboxylic dianhydride with 2 or more acid anhydride groups per molecule in an amount of 2 to 30 percent by weight of the concentrate.

9. The concentrate according to claim 8, wherein the multifunctional compound further comprises 0.1 to 10 weight percent of a sterically hindered phenolic antioxidant.

10. The concentrate according to claim 9, wherein the multifunctional compound further comprises 0.1 to 10 weight percent of an oxazoline.

11. The concentrate according to claim 9, wherein the sterically hindered phenolic antioxidant is calcium bis(monoethyl(3,5-di-tert-butyl-4-hydroxylbenzyl)phosphonate) or 4-((3,5-bis((4-hydroxy-3,5-ditert-butyl-phenyl)methyl)-2,4,6-trimethyl-phenyl)methyl)-2,6-ditert-butyl-phenol.

12. The concentrate according to claim 10, wherein the oxazoline is a monooxazoline or bisoxazoline or trioxazoline or a mixture thereof.

13. The concentrate according to anyone of claims 1 to 12 further comprising a thermal and/or process stabilizer selected from a secondary (preventive) antioxidant or a mixture of the secondary antioxidant and sterically hindered phenols in an amount of 0.1 to 5.0 percent by weight of the concentrate.

14. A process for the preparation of the concentrate according to anyone of claims 1 to 13, wherein the HT thermoplastic resin is selected from an aromatic polyester resin and PC, PA, PPO, PSU or PES and the multifunctional compound all in form of powder are blended and homogeneously mixed into the matrix of the ethylene-acrylate copolymer at temperatures of at least 20°C below the melting point of the multifunctional compound and by using an internal mixer such as a Banbury^{®} mixer, an extruder or any similar polymer processing equipment.

15. The process for the preparation of the concentrate according to claim 14, wherein the mixture from the internal mixer is continuously fed into an extruder, preferably a single-screw extruder, and extruded at temperatures of at least 20°C below the melting point of the multifunctional compound.

16. A process for the preparation of the concentrate according to anyone of claims 1 to 13 comprising melt blending the mixture of the multifunctional compound and the HT thermoplastic into the melt of the ethylene-acrylate copolymer by using an extruder, preferably a twin-screw extruder at temperatures of at least 20°C below the melting point of the multifunctional compound.

17. The process for the preparation of the concentrate according to anyone of claims 14 to 16, wherein the concentrate composition is processed at temperatures between 120°C and 175°C.

18. A foaming process for the production of a foamed cellular material of aromatic polyesters, wherein the polyester resins selected from a group consisting of virgin, recycled resin or a mixture thereof having an intrinsic viscosity from 0.4 to 1.4 dl/g are foamed with help of the concentrate of anyone of claims 1 to 13 in an amount from 1 to 20 percent by weight of the mixture.

19. A foamed cellular material obtainable according to claim 18.

20. Articles containing the foamed material of claim 19.

## Patentansprüche

1. Konzentrat (Masterbatch), geeignet als Kettenverlängerungs-/Verzweigungsmittel, umfassend ein Ethylen-Acrylat-Copolymer, ein Hochtemperatur (HT)-thermoplastisches Harz, ausgewählt unter einem aromatischen Polyesterharz, PC, PA, PPO, PSU oder PES, mit 1) einem Schmelzpunkt von mindestens 200 °C für kristalline oder 2) einer Glasumwandlungstemperatur von mindestens 140 °C für amorphe Polymere, und eine Multifunktionsverbindung, ausgewählt unter einer oder mehreren Kettenverlängerungs-/Verzweigungskomponenten mit einem Schmelzpunkt von über 140 °C, wobei das Konzentrat herstellbar ist durch Schmelzeverteilung der Multifunktionskettenverlängerungsverbindung in der Grundmasse des Ethylen-Acrylat-Copolymers bei einer Temperatur unterhalb des Schmelzpunktes der Multifunktionsverbindung.

2. Konzentrat nach Anspruch 1, wobei die Multifunktionsverbindung ausgewählt ist, aus einer Gruppe, bestehend aus Tetracarbonsäuredianhydrid, Oxazolinen, Oxazinen, Acyllactamen und einem Antioxidans, enthaltend sterisch gehinderte phenolische Endgruppen oder Gemische davon.

3. Konzentrat nach Anspruch 1, enthaltend 10 bis 85 Gew.-% Ethylen-Acrylat-Copolymer, ausgewählt unter Ethylenbutylacrylat (EBA), Ethylenethylacrylat (EEA) und Ethylenmethylacrylat (EMA)-Copolymer.

4. Konzentrat nach Anspruch 3, worin das Ethylen-Acrylat-Copolymer 3 bis 50 % Acrylatgehalt, bezogen auf das Gewicht des Ethylen-Acrylat-Copolymers, und einen Schmelzflussindex von 0,1 bis 50 g/10 min. bei 190 °C/2,16 kg aufweist.

5. Konzentrat nach Anspruch 1, enthaltend 10 bis 85 Gew.-% Hochtemperatur (HAT)-thermoplastisches Harz, ausgewählt unter aromatischem Polyesterharz, PC, PA, PPO, PSU oder PES.

6. Konzentrat nach Anspruch 5, worin die Hochtemperatur-Thermoplaste aromatische Polyester mit einer inneren Viskosität von 0,4 bis 1,4 dl/g sind.

7. Konzentrat nach Anspruch 1 oder 2, enthaltend 2 bis 30 % der Multifunktionsverbindung, bezogen auf das Gewicht des Konzentrats.

8. Konzentrat nach Anspruch 7, enthaltend die Multifunktionsverbindung, ausgewählt unter einem Tetracarbonsäuredianhydrid mit 2 oder mehr Säureanhydridgruppen pro Molekül, in einer Menge von 2 bis 30 Gew.-% des Konzentrats.

9. Konzentrat nach Anspruch 8, worin die Multifunktionsverbindung ferner 0,1 bis 10 Gew.-% eines sterisch gehinderten phenolischen Antioxidans enthält.

10. Konzentrat nach Anspruch 9, worin die Multifunktionsverbindung ferner 0,1 bis 10 Gew.-% eines Oxazolins enthält.

11. Konzentrat nach Anspruch 9, worin das sterisch gehinderte phenolische Antioxidans Ca-Bis(monoethyl(3,5-di-tert-butyl-4-hydroxylbenzyl)phosphonat) oder 4-((3,5-bis((4-hydroxy-3,5-ditert-butyl-phenyl)methyl)-2,4,6-trimethyl-phenyl)methyl)-2,6-ditert-butyl-phenol ist.

12. Konzentrat nach Anspruch 10, worin das Oxazolin ein Monooxazolin oder Bisoxazolin oder Trisoxazolin oder ein Gemisch davon ist.

13. Konzentrat nach einem der Ansprüche 1 bis 12, das außerdem noch einen Wärme- und/oder Verarbeitungsstabilisator, ausgewählt unter einem sekundärem (prophylaktischem) Antioxidans oder einem Gemisch aus dem sekundären Antioxidans und sterisch gehinderten Phenolen, in einer Menge von 0,1 bis 5,0 %, bezogen auf das Gewicht des Konzentrats, enthält.

14. Verfahren zur Herstellung des Konzentrats nach einem der Ansprüche 1 bis 13, wobei das HT-thermoplastische Harz ausgewählt wird unter einem aromatischen Polyesterharz und PC, PA, PPO, PSU oder PES und die Multifunktionsverbindung, jeweils in Pulverform miteinander gemischt und homogen in die Grundmasse des Ethylen-Acrylat-Copolymers bei Temperaturen von mindestens 20 °C unterhalb des Schmelzpunktes der Multifunktionsverbindung und unter Verwendung eines Innenmischers wie eines Branbury®-Mischers, eines Extruders oder einer beliebigen ähnlichen Polymerverarbeitungsanlage eingearbeitet werden.

15. Verfahren zur Herstellung des Konzentrats nach Anspruch 14, bei dem das Gemisch aus dem Innenmischer kontinuierlich einem Extruder, vorzugsweise einem Einschneckenextruder, zugeführt wird und bei Temperaturen von mindestens 20 °C unterhalb des Schmelzpunktes der Multifunktionsverbindung extrudiert wird.

16. Verfahren zur Herstellung des Konzentrats nach einem der Ansprüche 1 bis 13, umfassend die Einarbeitung des Gemisches aus der Multifunktionsverbindung und dem HT-Thermoplast im geschmolzenen Zustand in die Schmelze des Ethylen-Acrylat-Copolymers unter Verwendung eines Extruders, vorzugsweise eines Doppelschneckenextruders, bei Temperaturen von mindestens 20 °C unterhalb des Schmelzpunktes der Multifunktionsverbindung extrudiert wird.

17. Verfahren zur Herstellung des Konzentrats nach einem der Ansprüche 14 bis 16, wobei das Konzentratgemisch bei Temperaturen zwischen 120 °C und 175 °C verarbeitet wird.

18. Schäumungsverfahren zur Herstellung eines geschäumten zelligen Stoffs aus aromatischen Polyestern, wobei die Polyesterharze ausgewählt sind aus einer Gruppe, bestehend aus Frischharz, wiederverwendetem Harz oder einem Gemisch davon mit einer inneren Viskosität von 0,4 bis 1,4 dl/g, mit Hilfe des Konzentrats nach einem der Ansprüche 1 bis 13 in einer Menge von 1 bis 20 %, bezogen auf das Gewicht des Gemisches, geschäumt werden.

19. Geschäumtes zelliges Material, herstellbar nach Anspruch 18.

20. Erzeugnisse, enthaltend das geschäumte Material nach Anspruch 19.

## Revendications

1. Concentré (lot maître) utile comme agent d'extension/ramification de chaîne comprenant un copolymère d'éthylène-acrylate, une résine thermoplastique haute température (HT) étant sélectionnée parmi une résine de polyester aromatique, PC, PA, PPO, PSU ou PES et ayant 1) un point de fusion non inférieur à 200°C pour les polymères cristallins ou 2) une température de transition vitreuse non inférieure à 140°C pour les polymères amorphes et un composé multifonctionnel sélectionné parmi un ou plusieurs ingrédient(s) d'extension/ramification de chaîne ayant un point de fusion supérieur à 140°C, dans lequel le concentré peut être obtenu par distribution à l'état fondu du composé multifonctionnel d'extension de chaîne dans la matrice du copolymère d'éthylène-acrylate à une température inférieure au point de fusion du composé multifonctionnel.

2. Concentré selon la revendication 1, dans lequel le composé multifonctionnel est sélectionné parmi un groupe constitué du dianhydride tétracarboxylique, des oxazolines, des oxazines, des acyllactames et des antioxydants contenant des groupes terminaux phénoliques stériquement bloqués ou leurs mélanges.

3. Concentré selon la revendication 1 comprenant 10 à 85 pour cent en poids de copolymère d'éthylène-acrylate qui est sélectionné parmi le copolymère du butyl acrylate d'éthylène (EBA), de l'éthyl acrylate d'éthylène (EEA) et du méthyl acrylate d'éthylène (EMA).

4. Concentré selon la revendication 3, dans lequel le copolymère d'éthylène-acrylate contient 3 à 50 pour cent de la teneur en acrylate en poids du copolymère d'éthylène-acrylate et a un indice d'écoulement à l'état fondu de 0,1 à 50 g/10 min à 190°C/2,16 kg.

5. Concentré selon la revendication 1 comprenant 10 à 85 pour cent en poids de résine thermoplastique haute température (HT) étant sélectionnée parmi une résine de polyester aromatique, PC, PA, PPO, PSU ou PES.

6. Concentré selon la revendication 5, dans lequel les résines thermoplastiques haute température sont des polyesters aromatiques ayant un indice limite de viscosité de 0,4 à 1,4 dl/g.

7. Concentré selon la revendication 1 ou 2 comprenant 2 à 30 pour cent du composé multifonctionnel en poids du concentré.

8. Concentré selon la revendication 7 comprenant le composé multifonctionnel sélectionné parmi un dianhydride tétracarboxylique avec 2 groupes anhydride d'acide ou plus par molécule en une quantité de 2 à 30 pour cent en poids du concentré.

9. Concentré selon la revendication 8, dans lequel le composé multifonctionnel comprend en outre 0,1 à 10 pour cent en poids d'un antioxydant phénolique stériquement bloqué.

10. Concentré selon la revendication 9, dans lequel le composé multifonctionnel comprend en outre 0,1 à 10 pour cent en poids d'une oxazoline.

11. Concentré selon la revendication 9, dans lequel l'antioxydant phénolique stériquement bloqué est le bis(monoéthyl(3,5-di-*tert*-butyl-4-hydroxylbenzyl)phosphonate) de calcium ou le 4-((3,5-bis((4-hydroxy-3,5-*ditert-*butyl-phényl)méthyl)-2,4,6-triméthyl-phényl)méthyl)-2,6-*ditert*-butyl-phénol.

12. Concentré selon la revendication 10, dans lequel l'oxazoline est une monooxazoline ou une bisoxazoline ou une trioxazoline ou un mélange de celles-ci.

13. Concentré selon l'une quelconque des revendications 1 à 12 comprenant en outre un agent de stabilisation thermique et/ou de procédé sélectionné parmi un antioxydant secondaire (préventif) ou un mélange de l'antioxydant secondaire et de phénols stériquement bloqués en une quantité de 0,1 à 5,0 pour cent en poids du concentré.

14. Procédé de préparation du concentré selon l'une quelconque des revendications 1 à 13, dans lequel la résine thermoplastique HT est sélectionnée parmi une résine de polyester aromatique et PC, PA, PPO, PSU ou PES et le composé multifonctionnel tous sous la forme de poudre sont amalgamés et mélangés de manière homogène dans la matrice du copolymère d'éthylène-acrylate à des températures d'au moins 20°C en dessous du point de fusion du composé multifonctionnel et en utilisant un mélangeur interne tel qu'un mélangeur Banbury^{®}, une extrudeuse ou n'importe quel équipement semblable de transformation de polymère.

15. Procédé de préparation du concentré selon la revendication 14, dans lequel le mélange issu du mélangeur interne est continuellement chargé dans une extrudeuse, de préférence une extrudeuse simple vis, et extrudé à des températures d'au moins 20°C en dessous du point de fusion du composé multifonctionnel.

16. Procédé de préparation du concentré selon l'une quelconque des revendications 1 à 13 comprenant le malaxage à l'état fondu du composé multifonctionnel et de la résine thermoplastique HT dans la masse fondue du copolymère d'éthylène-acrylate en utilisant une extrudeuse, de préférence une extrudeuse double vis à des températures d'au moins 20°C en dessous du point de fusion du composé multifonctionnel.

17. Procédé de préparation du concentré selon l'une quelconque des revendications 14 à 16, dans lequel la composition de concentré est traitée à des températures comprises entre 120°C et 175°C.

18. Procédé de moussage pour la production d'un matériau cellulaire moussé de polyesters aromatiques, dans lequel les résines de polyester sélectionnées parmi un groupe constitué de résine vierge, recyclée ou d'un mélange de celles-ci ayant un indice limite de viscosité de 0,4 à 1,4 dl/g sont moussées à l'aide du concentré selon l'une quelconque des revendications 1 à 13 en une quantité de 1 à 20 pour cent en poids du mélange.

19. Matériau cellulaire moussé pouvant être obtenu selon la revendication 18.

20. Articles contenant le matériau moussé selon la revendication 19.
